# EUROPEAN PATENT APPLICATION

(11) **EP 4 775 883 A1**
(43) Date of publication of application: **15.07.2026**
(21) Application number: 25227760.3
(22) Date of filing: 30.12.2025
(51) Int. Cl.: F23N 5/00

(54) **ENHANCED SENSORS FOR HEATING OPERATIONS**

(30) Priority: 12.01.2025 US 202563744291 P; 15.12.2025 US 202519419730
(71) Applicant: Honeywell International Inc., Charlotte, NC 28202 (US)
(72) Inventor: HARRIS, James W., 28202 Charlotte (US); KRAUS, Kurt, 28202 Charlotte (US); BRIDGE, Nicholas W., 28202 Charlotte (US); HUGHES, Michael, 28202 Charlotte (US)
(74) Representative: Haseltine Lake Kempner LLP

(57) **Abstract**

Systems, apparatuses, methods and computer program products are provided herein. For example, a computer-implement method described herein includes generating, using dual frequency comb spectroscopy, measurement output comprising measured concentration of one or more gases associated with a heating operation comprising one or more burners. The method includes performing, based on the measurement output, one or more optimization operations comprising generating control data for the heating operation based on the measurement output. The method includes applying the control data to the heating operation, wherein applying the control data comprises automatically modifying one or more operating parameters of the heating operation based on the control data.

## Description

### CROSS-REFERENCE TO RELATED APPLICATIONS

This application claims priority to U.S. Provisional Patent Application No. 63/744,291, filed on January 12, 2025, which is incorporated herein by reference in its entirety.

### TECHNICAL FIELD

Embodiments of the present disclosure generally relate to heating operations, and, more particularly, to enhanced sensors for heating operations.

### BACKGROUND

Applicant has identified many technical challenges associated with heating operations. Through applied effort, ingenuity, and innovation, many of these identified problems have been solved by developing solutions that are included in embodiments of the present disclosure, many examples of which are described in detail herein.

### SUMMARY

According to an aspect of the present disclosure, a computer-implemented method is provided. The method includes generating, using dual frequency comb spectroscopy, measurement output comprising measured concentration of one or more gases associated with a heating operation comprising one or more burners. The method further includes performing, based on the measurement output, one or more optimization operations comprising generating control data for the heating operation based on the measurement output. The method further includes applying the control data to the heating operation, wherein applying the control data comprises automatically modifying one or more operating parameters of the heating operation based on the control data.

The one or more gases may comprise oxygen, carbon monoxide, carbon dioxide, water vapor, and nitrogen dioxide. The dual frequency comb spectroscopy may be performed using a dual frequency comb interferometer device comprising two locked laser systems configured to sweep through a wavelength range and output an absorption spectrum as a radio frequency signal. The dual frequency comb interferometer device may be positioned within a heater comprising the one or more burners. The one or more optimization operations may comprise optimizing the heating operation to one or more of: (i) optimize the heating operation to minimize production of nitrogen oxides and sulfur oxides, (ii) optimize the heating operation for maximum efficiency, (iii) optimize the heating operation to maximize the utilization of feedstocks such as hydrogen or biogas while maintaining efficient combustion, or (iv) optimize the heating operation to increase the combustion efficiency, wherein increasing combustion efficiency comprises reducing the amount of unburnt hydrocarbons in the flue gas. Automatically modifying the one or more operating parameters may comprise adjusting an air-to-fuel ratio based on the measured concentration of the one or more gases. The method may further comprise monitoring flame characteristics of the one or more burners using an infrared sensor.

According to another aspect of the present disclosure, a sensor system is provided. The sensor system includes a dual frequency comb interferometer device configured to measure concentration of one or more gases associated with a heating operation comprising one or more burners. The dual frequency comb interferometer device comprises two locked laser systems configured to sweep through a wavelength range and output an absorption spectrum as a radio frequency signal. The sensor system further includes a processor configured to generate control data for the heating operation based on the measured concentration of the one or more gases, and automatically modify one or more operating parameters of the heating operation based on the control data to optimize combustion efficiency.

The one or more gases may comprise oxygen, methane, carbon monoxide, carbon dioxide, water vapor, and nitrogen dioxide. The dual frequency comb interferometer device may be configured to monitor post-combustion regions comprising a firebox, a convection section, and a stack area. The dual frequency comb interferometer device may be positioned within a heater comprising the one or more burners. The processor may be further configured to one or more of: (i) optimize the heating operation to minimize production of nitrogen oxides and sulfur oxides, (ii) optimize the heating operation for maximum efficiency, (iii) optimize the heating operation to maximize the utilization of feedstocks such as hydrogen or biogas while maintaining efficient combustion, or (iv) optimize the heating operation to increase the combustion efficiency, wherein increasing combustion efficiency comprises reducing the amount of unburnt hydrocarbons in the flue gas. The processor may be configured to automatically adjust an air-to-fuel ratio based on the measured concentration of the one or more gases. The sensor system may further comprise an infrared sensor configured to monitor flame characteristics of the one or more burners.

According to another aspect of the present disclosure, an apparatus is provided. The apparatus comprises at least one processor and at least one memory storing instructions that, when executed by the at least one processor, cause the apparatus to generate, using dual frequency comb spectroscopy, measurement output comprising measured concentration of one or more gases associated with a heating operation comprising one or more burners. The instructions further cause the apparatus to perform, based on the measurement output, one or more optimization operations comprising generating control data for the heating operation based on the measurement output. The instructions further cause the apparatus to apply the control data to the heating operation, wherein applying the control data comprises automatically modifying one or more operating parameters of the heating operation based on the control data.

According to other aspects of the present disclosure, the apparatus may include one or more of the following features. The one or more gases may comprise oxygen, methane, carbon monoxide, carbon dioxide, water vapor, and nitrogen dioxide. The dual frequency comb spectroscopy may be performed using a dual frequency comb interferometer device comprising two locked laser systems configured to sweep through a wavelength range and output an absorption spectrum as a radio frequency signal. The dual frequency comb interferometer device may be positioned within a heater comprising the one or more burners. The one or more optimization operations may comprise optimizing the heating operation to one or more of: (i) optimize the heating operation to minimize production of nitrogen oxides and sulfur oxides, (ii) optimize the heating operation for maximum efficiency, (iii) optimize the heating operation to maximize the utilization of feedstocks such as hydrogen or biogas while maintaining efficient combustion, or (iv) optimize the heating operation to increase the combustion efficiency, wherein increasing combustion efficiency comprises reducing the amount of unburnt hydrocarbons in the flue gas. Automatically modifying the one or more operating parameters may comprise adjusting an air-to-fuel ratio based on the measured concentration of the one or more gases.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF FIGURES

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIGS. 1A-1C illustrate an example burner in accordance with at least one example embodiments of the present disclosure.
FIG. 1D illustrates a block diagram of an example system environment in which embodiments of the present disclosure may operate.
FIG. 2 illustrates a block diagram of an example apparatus in accordance with at least one example embodiment of the present disclosure.
FIGS. 3 and 4 illustrate flame comparisons in accordance with at least one example embodiment of the present disclosure.
FIG. 5 illustrates an example heater incorporating one or more components of a sensor system in accordance with at least one example embodiment of the present disclosure.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically connected," "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

### Overview

Petroleum refining and petrochemical processes frequently involve heating process streams in a furnace. The interior chamber of the furnace contains tubes which contain the process streams. The interior chamber is heated by a plurality of gas burners which receive a fuel which combusts to produce heat. One area of concern for gas burners is the production of NOx gases. As would be appreciated, NOx refers to oxides of nitrogen, principally comprised of nitric oxide, NO, and nitric dioxide, NO2. Thermal NOx, Fuel NOx, and Prompt Nox formation are some examples of NOx formation mechanisms in combustion processes. NOx formation in gas burners may be mitigated by staging fuel and air and creating primary and secondary combustion (flame) zones. Staged air and staged fuel burners work primarily on the Thermal NOx and Prompt NOx formation processes. The highest flame temperatures, and thereby the greatest potential for Thermal NOx formation, is achieved when gaseous fuels and combustion air are thoroughly mixed and rapidly combusted in or near stoichiometric proportions. Accordingly, the staged air and staged fuel burners seek to lower the temperature of the flame and thereby lower the NOx production. Classic staged fuel or staged air burners produce two combustions zones for off-stoichiometric combustion.

In the case of the staged fuel burner, the combustion air passes through the primary combustion zone and into the secondary combustion zone with the partial combustion products of the primary combustion zone. In this case, the primary combustion zone is lean, having an excess amount of combustion air. Lean combustion reduces the flame temperature, in part, as all of the mass of the combustion air rapidly absorbs and commutes heat from the flame out of the primary combustion zone and thus allowing time (measurable in milliseconds) for heat to radiate out of the primary combustion zone to the surrounding environment including to the heater, boiler or furnace process tubes. The fully and/or partially combusted (reacted) products of combustion pass from the primary combustion zone to the secondary or staged combustion zone. This transit allows time (again measurable in milliseconds) for the primary combustion zone products to further radiate heat out to the surrounding environs and process tubes. Therefore, the somewhat cooled combustion products from the primary combustion zone act to conduct heat from and cool the secondary combustion zone. Further, the secondary combustion zone combustion reactions occur, on average, at relatively lean conditions as the typical process heater, boiler or furnace operates at lean conditions with an excess of 5% to 25% combustion air. Thereby the combustion process is complete to a fair degree, industrially acceptable level of efficiency, 5% to 25% excess air.

The classic staged air burner reverses the staging process and introduces the fuel gas for combustion in the primary combustion zone and only a portion of the combustion air. In the case of the staged air burner, the primary combustion zone may operate sub-stoichiometrically and achieve industrially acceptable excess air levels, 5% to 25% excess air, as reactants and products pass through the secondary combustion zone. With the staged air burner, the reactants must pass through a region of near stoichiometry where flame temperatures, and thereby Thermal NOx formation, is high and therefore staged air burners can have difficulty delivering very low NOx emissions.

More recently, internal flue gas recirculation burners have utilized flue gas within the heater or furnace combustion chamber which is motivated by the fuel gas and mixed into the primary and secondary combustion zones. This flue gas, relatively cool, massive products of combustion (flue gas), pass into and through the combustion zones thereby further cooling the combustion zone and reducing Thermal NOx formation. It is also understood that the water vapor in the flue gas also serves to mitigate NOx created via the Prompt NOx mechanism by solvating and catalyzing hydrocarbon combustion. Both staged air and staged fuel burners can require and produce large, voluminous flames to achieve low NOx emissions.

Generally, heating operations, such as, fired heater operations are inherently dangerous given that fuel, air and flames are involved and present numerous technical challenges related to monitoring and control of the heating operations, including combustion processes thereof. Conventional monitoring approaches may rely on expensive on-line analyzers that require regular calibration and maintenance attention. These analyzers may suffer from drift concerns and high capital costs, which can impact operational efficiency and increase overall expenses for heating operations. Tunable diode laser absorption spectroscopy (TDLAS) analyzers may present maintenance, drift, and capital cost concerns that can affect the reliability and accuracy of gas measurements in heating operations. Additionally, conventional approaches may require multiple devices to measure different gas species, which can lead to independent drift issues across the various measurement devices.

Visual inspection of operating conditions may be commonly employed in fired heater operations to monitor flame patterns, flame color, flame-out conditions, and mechanical abnormalities. Such visual inspections may be labor-intensive and costly, requiring regular attention from operations personnel. The inspection process may also present safety concerns due to the inherent dangers associated with fuel, air, and flame environments in fired heater operations.

Various embodiments of the present disclosure address the above challenges and deficiencies associated with heating operations such as fired heater operations. Example embodiments monitor various gases in post combustion regions of the firebox, convection, and stack areas of a heater such as a fired heater. Some example embodiments monitor these gases using a dual frequency comb interferometer device.

Example embodiments may configure a dual frequency comb interferometer device to measure different gas species (e.g., measure gas concentration of various gas species). The dual frequency comb interferometer device may be adaptable to measuring different gas species through adjustment of frequency combs to target specific measurements. This adaptability may improve measurement of changing fuel and flue gas composition. The dual frequency comb interferometer device may be configured to emit light through the gas of interest, retroflect and analyze the retroflected light. The dual frequency comb interferometer device may utilize two locked laser systems to quickly sweep through wavelength ranges such as near-infrared or mid-infrared spectra. The dual frequency comb interferometer device may output absorption spectrum data as radio frequency signals, enabling rapid analysis of gas concentrations.

In some embodiments, the dual frequency comb interferometer device may be implemented on a photonic chip, providing compact form factor and reducing cost compared to conventional analyzer systems. Some example embodiments may utilize a sensor device such as chip scale dual frequency comb interferometer device to enable software-based monitoring of several variables associated with a heating operation that, otherwise require, labor intensive and costly inspections. Some example embodiments provide a dual frequency comb interferometer device or a chip scale dual frequency comb interferometer device that measures, using the single device, increased number of gas species across a wider spectrum at a faster speed. By utilizing such dual frequency comb interferometer device, example embodiments of the present disclosure overcome the maintenance, drift and capital cost concerns associated with on-line analyzers (or other analyzers).

In this regard, the dual frequency comb interferometer device implementation may provide enhanced capabilities for gas measurement in heating operations. The dual frequency comb interferometer device may measure multiple gas species from a single device across a wider spectrum at faster speeds compared to conventional measurement approaches. The dual frequency comb interferometer device implementation may overcome maintenance, drift, and capital cost concerns associated with traditional analyzer systems. The dual frequency comb interferometer device implementation allows for gas measurement for various species including oxygen, methane, carbon monoxide, carbon dioxide, water vapor, and nitrogen dioxide in post-combustion regions of the firebox, convection, stack, and/or other areas of a heater.

Example embodiments of the present disclosure provide automated optimization of heating operations through the application of gas measurement data from the dual frequency comb interferometer device. Control systems may be configured to receive measurement data and generate, based on the measurement data, control data for adjusting operating parameters of heating operations. The optimization may target various objectives including maximizing efficiency, minimizing pollutant production, optimizing feedstock utilization, and improving combustion efficiency.

Example embodiments of the present disclosure provide software-based monitoring of variables that would otherwise require labor-intensive and costly manual inspections. Real-time monitoring capabilities may provide operators with comprehensive data regarding heater performance, reducing the need for visual inspections and improving operational safety. The enhanced measurement capabilities may support dynamic adjustments to air-to-fuel ratios, stack pressure, and combustion air flow setpoints to achieve optimal operating conditions.

### EXAMPLE BURNER, SYSTEMS AND APPARATUSES OF THE DISCLOSURE

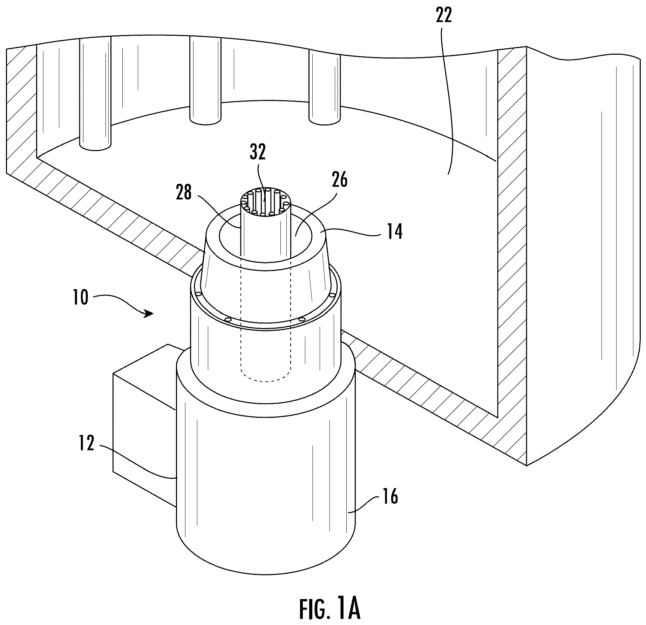

FIGS. 1A-C illustrate an example burner in accordance with some embodiments of the present disclosure. Specifically, FIGS. 1A-C illustrate various configurations of an example burner 10 in accordance with some embodiments of the present disclosure. Such example burner 10 and various configurations thereof are described in detail in U.S. Patent No. 11,649,960 and, to supplement the present disclosure, this application incorporates by reference U.S. Patent No. 11,649,960.

Now referring to FIG. 1A, an example configuration of the burner 10, includes a plenum, or wind box, 12 and a tile 14 disposed on top of the plenum 12. The use of the phrase "on top" is in relation to the drawings, as the burners 10 may be installed in different configurations/orientations.

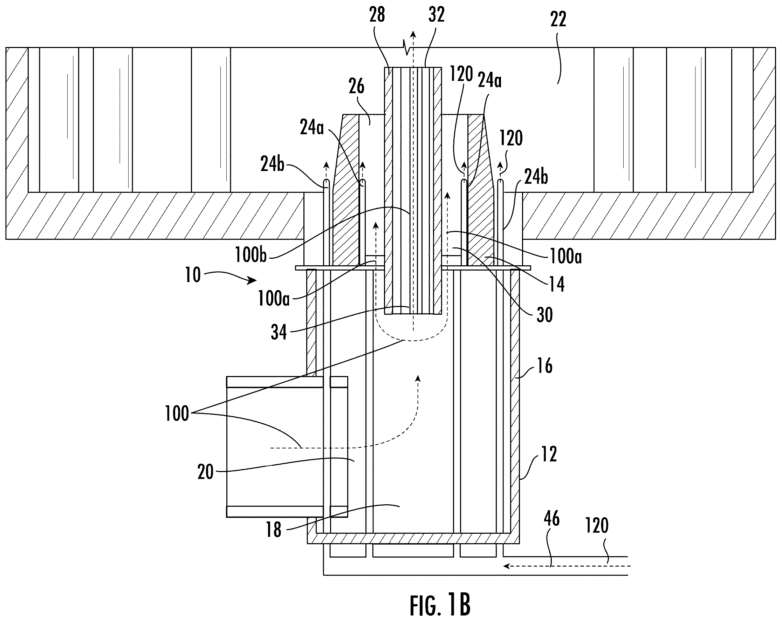

With reference to FIG. 1B, the wind box 12 includes a body 16 that forms a cavity 18 having at least one opening 20 so that air, also called combustion air, naturally flows into the cavity 18. The flow of combustion air is indicated with arrows 100. Instead of a natural draft burner, a fan or blower can be present to force combustion air 100 into the wind box 12 to create a forced air burner. The combustion air 100 that enters the cavity 18 is passed through the tile 14 and is used is used to produce a flame above the tile 14 in a primary combustion zone 22 within a combustion chamber that may be a stack or furnace.

In addition to the combustion air, the primary combustion zone receives a fuel gas, indicated with arrows 120, for producing the flame. Accordingly, fuel lines, or conduits, 24a, 24b pass through the body 16 of the wind box 12 and through the burner tile 14. Some of the fuel lines 24a have outlets which inject a fuel stream with fuel gas 120 into the primary combustion zone. The fuel stream may include combustion air 100 and/or a non-combustion gas or NOx reducing medium. The depicted burner 10 also includes some fuel lines 24b which are configured to provide the fuel gas 120 to a secondary combustion zone outside of the primary combustion zone. Contemplated sources and/or compositions of the fuel gas include refinery fuel gas, synthetic fuel gas, process off gas, natural gas, propane, butane, LPG, hydrogen including up to 100% by volume, and any combination of the foregoing. The pressure of the fuel gas may vary from 0.07 to 2.07 Barg (1 to 30 psig).

The fuel gas 120 in the fuel stream and the oxygen in the combustion gas 100 mix and may be used to produce a flame. The example burner 10 seeks to reduce the amount of NOx gases that are produced as a result of this combustion by separating the combustion air 100 that is passed to the primary combustion zone into different portions. As shown in FIG. 1B, the burner tile 14 has a throat 26 and a bypass conduit, or passage, 28 which allows some of the combustion air 100 to pass from the plenum 12 to the primary combustion zone. More specifically, a conduit 30, or passage, having an annular profile is formed between the surface of the throat 26 and the outer surface of the bypass conduit 28. A first portion 100a of the combustion air 100 from the plenum 12 flows through conduit 30 of the burner tile 14 to the primary combustion zone. A second portion 100b of the combustion air flows through the bypass conduit 28 and is injected via an outlet 32 into the primary combustion zone. Thus, relative to the first portion 100a of combustion air, the second portion 100b of combustion air is injected downstream into the primary combustion zone.

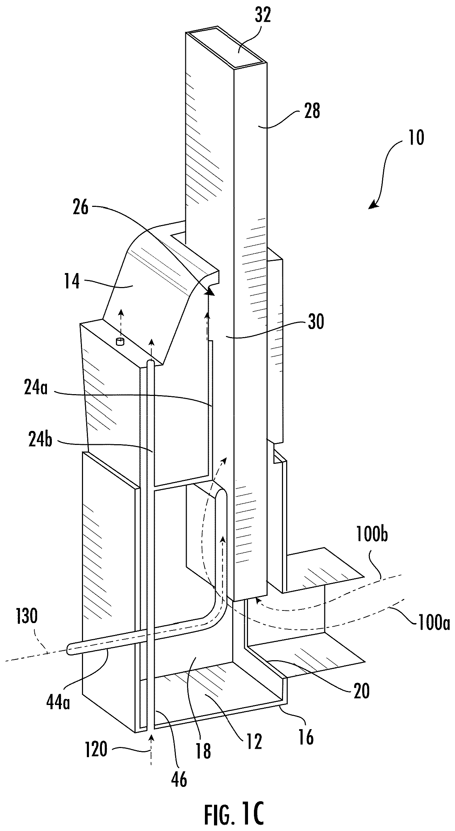

Now referring to FIG. 1C, another configuration of the example burner 10 is depicted. The depicted configuration of the example burner 10 may be configured to produce a "flat" flame. In the example configuration of the burner 10 depicted in FIG. 1C, the conduit or passage 30 for the first portion 100a of combustion air, formed between the surface of the throat 26 and the outer surface of the bypass conduit 28, has a rectangular profile instead of annular. Similarly, the bypass conduit 28, for the second portion of 100b of the combustion air, also has a rectangular profile.

In either configuration, by separating the combustion air 100 into multiple portions 100a, 100b, the amount of oxygen initially mixed with the fuel gas 120 in the primary combustion zone will be lower. The second portion 100b of combustion air 100 is still injected into the primary combustion zone, but the flame will have a lower temperature and thereby produce less NOx compared with a burner that mixes of all of combustion air in the primary combustion zone at the same time. The example burner 10 may mix the combustion air in both portions 100a, 100b with the fuel gas downstream of the burner tile 14. Thus, the amount of fuel gas 120 in the first and second portions 100a, 100b of the combustion air is about the same, and should be minimal, if any.

The example burner 10 may include a plurality of bypass conduits 28. The plurality of bypass conduits 28 allow fine-grained control of the exact injection point(s) of the second portions 100b of the combustion air injected into the combustion zone. Multiple injection points extend the advantage that some of the combustion air bypasses the initial mixing in the primary combustion zone and allows nuanced application. For example, computational or physical modeling can find that certain physical locations are where significant NOx formation occurs when there is no bypass air. Bypassing these locations in the burners 10 with a portion of the combustion air 100 changes the stoichiometry at that specific location. Further modeling may demonstrate that the single bypass conduit 28, while reducing NOx formation, moves the location of where further significant, but reduced, NOx formation is occurring. Additional bypassing of combustion air around these new, but lesser, NOx formation locations or hot spots will further change the stoichiometry of these new locations and further reduce NOx formation.

Additionally, as should be appreciated, FIGS. 1A-1C may depict a diffusion mix burner in which all of the fuel gas 120 is injected into the combustion zone 22 (i.e., furnace) and then is mixed with the combustion air. In some embodiments, all of the fuel gas 120 is mixed with some combustion air 100 prior to being injected into the combustion zone 22. The remaining combustion air 100 that is not mixed with fuel gas 120 is injected into the combustion zone 22 and mixes with the fuel gas 120 therein. The bypass conduits 28 also each include an inlet 34 opposite the outlet 32. The inlet 34 of the bypass conduits 28 may take many configurations to increase, decrease, modulate, and/or otherwise prescribe or actively control the combustion air entering the bypass conduit.

In some examples, the bypass conduits 28, and thus their respective inlets 34, may have a generally constant measurement such as a diameter or length or width along a longitudinal axis (running the inlet 34 to the outlet 32) of the bypass conduits 28. Alternatively, in some examples, the inlet 34 may have an increasing measurement (such as a diameter or length or width) compared with the rest of the bypass conduit 28 so as to provide the inlet with a flared end or with a bell shape. In some examples, the inlet 34 may have a decreasing measurement (such as a diameter or length or width) compared with the rest of the bypass conduit 28 so as to provide the inlet 34 with an inverted cone or pyramid shape. The inlet 34 may also have a fixed or adjustable opening.

The outlets 32 of the bypass conduits 28 may be configured or designed to achieve specific fluid flow properties. For example, a mixing device 36 may be disposed at the outlet 32 of the bypass conduit 28. The mixing device 36 facilitates the low-pressure loss, rapid mixing of the portion of the combustion air flowing though the bypass conduit 28 and the surrounding partially combusted products in the primary combustion zone. Various mixing devices 36 such as static mixers, perforated bluff bodies, spin diffusors and nozzles can be applied at or near (upstream or downstream) of the outlet 32 of the bypass conduits 28 and the depicted mixing device 36 is not intended to be limiting.

By utilizing flow control devices/configurations at the inlet 34 and the outlet 32 of the bypass conduits 28, the partial pressure of oxygen, the available oxygen for combustion, the amount of oxygen and other transported gases, and the rate of mixing of oxygen and other gases may be modulated and optimized either in fixed static designs or as part of actively managed, continuously optimized systems.

In order to further reduce the temperature of the flame in the primary combustion zone, as can be seen in FIGS. 1A and 1B, fins 38 may be provided on an inner surface of the bypass conduit 28. The fins 38 are for heat transfer so that heat that may be radiated or conducted from the burner flame to the bypass conduit 28. The relatively cool combustion air or other media passing through the bypass conduit 28 will conduct heat from the fins 38 thereby cooling the bypass conduit 28 and mitigating any high temperature affects or degradation of the bypass conduit 28 and mitigate NOx formation in the burner flame by cooling the flame.

In some configurations of the burner 10, all the fuel gas 120 may be pre-mixed with some portion of the combustion gas 100 prior to injection into the combustion zone 22. Accordingly, the burner 10 may include a pre-mixer that has an inlet 42 configured to receive the fuel gas 120 as well as a portion of the combustion air 100 from the plenum 12. This pre-mixed combination will pass through the pre-mixer and then to the fuel lines 24a for the primary combustion zone, as well as to the fuel lines 24b for the secondary combustion zone. Any combustion air 100 that is pre-mixed with the fuel gas 120 via the pre-mixer is not considered the first and second portions 100a, 100b of the combustion air 100 discussed above.

In some examples, control of the NOx production may be achieved by providing an NOx reducing medium 130. These NOx reducing media may include, but are not limited to, fluids such as flue gas from the combustion zone 22, flue gas from the exhaust of the heater, boiler of furnace, steam (water vapor), nitrogen, carbon dioxide or even fuel gas such as methane. It is understood that inert gases such as water vapor, nitrogen and carbon dioxide injected in the fuel gas or air stream of a burner can help reduce NOx emissions by reducing the partial pressure of reactants, both fuel and air, cooling and by transferring heat out of the combustion section of the combustion zones. Accordingly, in some of the various configurations of the example burner 10, a portion or all the NOx reducing medium 130 is passed into the bypass conduit(s) 28 to facilitate selective and designed proportioning of the NOx reducing medium in the optimal location(s) in the flame zone(s).

As described herein, the NOx reducing medium 130 may be injected, via one or more conduits 44a, 44b, 44c, 44d, at any one or combinations of locations into the burner 10. For example, conduits 44a may inject the NOx reducing medium 130 into the passage 30 of the tile 14 to mix with the first portion 100a of combustion air. Additionally, conduits 44b may inject the NOx reducing medium 130 into the plenum 12. Within the plenum 12, the NOx reducing medium 130 will mix with the combustion air 100. The mixture of combustion air 100 and the NOx reducing medium 130 may be passed to the primary combustion zone via both the bypass conduit 28 and the passage 30 of the tile 14 as described above regarding the first and second portions 100a, 100b of the combustion air. Further, conduits 44c inject the NOx reducing medium 130 into a conduit 46 that supplies the fuel gas 120 to the burner 10. The mixture of fuel gas and the NOx reducing medium is injected into the pre-mixer 40, drawing some combustion air 100 into the pre-mixer as well. While there may be many and various sources for the NOx reducing medium, one preferred source is the flue gas from the combustion zone 22 itself.

In some examples, the flue gas may be drawn down directly from combustion zone 22 via a conduit 48 by, for example, a powered fan 50. If necessary, to manage the temperature of the flue gas, a heat exchanger may be provided. Thus, flue gas from the combustion zone 22 may flow on one side of the heat exchanger and combustion air may pass through the other side of the heat exchanger (and be passed to the plenum 12). This heat exchanger not only reduces the temperature of the flue gas to allow easier compression and injection, but it also conserves the heat from the flue gas and reintroduces it to the burner 10 via the combustion air. The rate of injection of NOx reducing medium may be independent of the fuel gas pressure, flow rate, and composition. In general, the flue gas drawn down from the combustion zone 22 may be injected into any one or any combination of injection points discussed above. For example, the flue gas may be injected, via the conduit 44c, into the pre-mixer by being mixed with the fuel gas from the conduit 46, it, although not depicted as such, it could be directly injected into the pre-mixer.

In general, greater recirculation and injection of flue gas into the burner 10 will result in lower NOx formation, formed both by Thermal NOx and Prompt NOx mechanisms. Further, these high levels of flue gas recirculation can reduce, or reform, freed nitrogen radicals created from the oxidation or combustion of fuel bound NOx to molecular nitrogen, N₂. Therefore, the present burner also reduces NOx formed via the Fuel NOx mechanism. Flue gas from a fluidized catalytic cracking (FCC) unit may be another source of NOx reducing medium that may be used to reduce NOx production from a burner flame. An exemplary FCC unit is described in U.S. Pat. Pub. Nos. 2021/0009904 and 2020/0325087, both incorporated herein by reference. While the use of the FCC flue gas, alone, is believed to reduce the NOx production, if used in a burner having a bypass conduit 28, the production of NOx gases will be further reduced. However, it is believed that the FCC flue gas could be used with any burner.

The FCC flue gas varies somewhat in composition to heater flue gas often contains some carbon monoxide and other unburned or incompletely burned hydrocarbons or other combustible gases. Thus, the FCC flue gas can also act as some of the fuel gas providing hydrocarbons for combustion. Moreover, the FCC flue gas has a relatively high pressure (0.5 to 4.0 Barg (7.25 to 58 psig) at the burner). This higher-pressure flue gas allows distribution across the refinery/petrochemical complex to multiple and various heaters, boilers and furnaces and their burners. At pressure, this FCC flue gas may not require heat exchanger and fan. It is believed to be particularly advantageous if the FCC flue gas is used within the FCC unit. Specifically, the FCC unit utilizes steam for various aspects, including as an NOx reducing medium in burners within the FCC unit. The FCC flue gas may replace some or all the steam typically used in FCC units, thereby lowering the operating costs while producing a stable flame with low NOx production. Again, while not required, the burner in the FCC unit may include the bypass conduit 28 described above.

By designing for and actively controlling the injection rates, locations, localized stoichiometry and NOx reducing medium introduced to the combustion process, the flame, the NOx production can be mitigated to extremely low values, less than 10 ppmvd with relatively modest amounts of NOx reducing media such as flue gas. Increasing rates of flue gas recirculation, while further reducing NOx, can lead to burner instability and/or loss of flame. By designing for and actively controlling the injection rates, locations, localized stoichiometry and NOx reducing medium introduced to the combustion process, the flame and the NOx formation can be mitigated while maintaining good burner and flame stability and continuous operation. The NOx emissions from the heater may be monitored along with the stack oxygen and the combustion chamber pressure or draft. The rate, the amount of NOx reducing medium delivered, or both may be increased at the desired locations in the flame zone until the required NOx reduction is achieved.

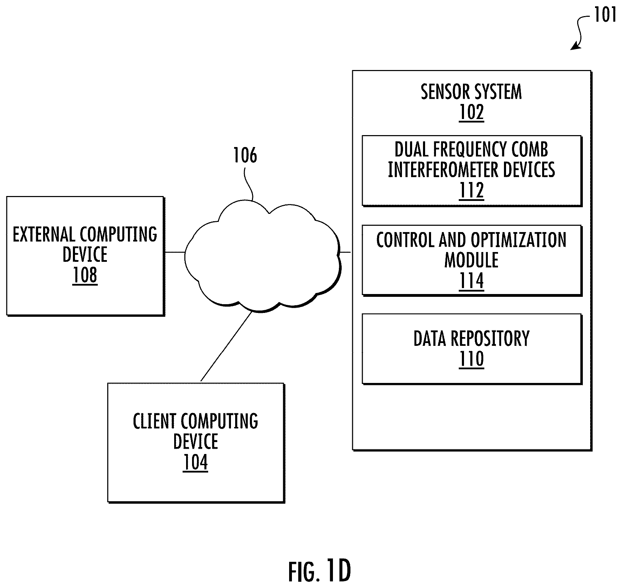

Any of the above lines, conduits, units, devices, vessels, surrounding environments, zones or similar may be equipped with one or more monitoring components including sensors, measurement devices, data capture devices or data transmission devices. Signals, process or status measurements, and data from monitoring components may be used to monitor conditions in, around, and on process equipment. Such example monitoring component is described with reference to FIG. 1D. Signals, measurements, and/or data generated or recorded by monitoring components may be collected, processed, and/or transmitted through one or more networks or connections. Signals, measurements, and/or data generated or recorded by monitoring components may be transmitted to one or more computing devices (such as client computing device 104 and/or external computing device 108 described below with respect to FIG. 1D) or systems.

FIG. 1D illustrates a block diagram of an example system environment 101 within which embodiments of the present disclosure may operate. Specifically, FIG. 1D illustrates an example sensor system 102, one or more client computing devices 104, and one or more external computing devices 108. The sensor system 102, one or more client computing devices 104, and/or the one or more external computing devices 108 may communicate with each other over one or more communications network(s), for example a communications network 106. The sensor system 102 may represent a monitoring component associated with a heating process (heating operation) as described above with reference to FIGS. 1A-1C. The sensor system 102 may comprise one or more components that facilitates such monitoring described above with reference to FIGS. 1A-1C. In some embodiments, at least a portion of the sensor system 102 (e.g., one or more components thereof) may be embodied within a heater. The heater for example may be a fired heater comprising one or more burners such as the example burner 10 described above with reference to FIGS. 1A-1C

It should be appreciated that the communications network 106 in some embodiments is embodied in any of a myriad of network configurations. In some embodiments, the communications network 106 embodies a public network (e.g., the Internet). In some embodiments, the communications network 106 embodies a private network (e.g., an internal localized, or closed-off network between particular devices). In some other embodiments, the communications network 106 embodies a hybrid network (e.g., a network enabling internal communications between particular connected devices and external communications with other devices). The communications network 106 in some embodiments includes one or more base station(s), relay(s), router(s), switch(es), cell tower(s), communications cable(s) and/or associated routing station(s), and/or the like. In some embodiments, the communications network 106 includes one or more user controlled computing device(s) (e.g., a user owned router and/or modem) and/or one or more external utility devices (e.g., Internet service provider communication tower(s) and/or other device(s)).

Each of the components of the environment 101 communicatively coupled to transmit data to and/or receive data from one another over the same or different wireless and/or wired networks embodying the communications network 106. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1D illustrate certain system entities as separate, standalone entities communicating over the communications network 106, the various embodiments are not limited to this architecture. In other embodiments, one or more computing entities share one or more components, hardware, and/or the like, or otherwise are embodied by a single computing device such that connection(s) between the computing entities over the communications network 106 are altered and/or rendered unnecessary. For example, in some embodiments, the one or more client computing devices 104 or the one or more external computing devices 108 includes some or all of the sensor system 102, such that an external communications network 106 is not required.

In some embodiments, the sensor system 102, the one or more client computing devices 104, and/or the one or more external computing devices 108 are embodied in an on-premises system within or associated with an entity, for example, an enterprise. In such some embodiments, the sensor system 102, the one or more client computing devices 104, and/or the one or more external computing devices 108 may be communicatively coupled via at least one wired connection. Alternatively, or additionally, in some embodiments, the one or more client computing devices or the one or more external computing devices 108 includes the sensor system 102 (or portion thereof), for example as a software component of a single enterprise terminal. In some embodiments, an enterprise refers to an entity such as a business, an organization, and/or the like.

The sensor system 102 may include any number of computing device(s) and/or system(s) (e.g., server system) configured, for example, via hardware, software, firmware, and/or a combination thereof, to facilitate and/or perform various functionalities associated with gas measurements. For example, in some embodiments, the sensor system 102 may include any number of computing device(s) and/or system(s) configured measuring a wider range of gases (e.g., oxygen, methane, carbon monoxide, carbon dioxide, nitrogen dioxide, and/or other gases).

The sensor system 102 may incorporate dual comb spectroscopy (DCS) techniques. In some embodiments, the sensor system 102 includes one or more dual frequency comb interferometer devices 112. In some embodiments, the dual frequency comb interferometer device 112 may be embodied by or implemented on a chip such as a photonic chip, providing compact form factor. In this regard, the dual frequency comb interferometer device 112 may be a chip scale dual frequency comb device. In various embodiments, the dual frequency comb interferometer device 112 is configured for measuring an increased number of gas species across a wider spectrum, and at a faster speed. In various embodiments, the sensor system 102 (e.g., dual frequency comb interferometer device 112 thereof) may be configured to monitor various gas species in the post combustion regions of a firebox, convection, stack, and/or other areas of a heater such as a fired heater.

In various embodiments, the sensor system 102 (e.g., the dual frequency comb interferometer device 112 thereof) may be configured to measure the different gas species by adjustment of the frequency combs to target specific measurements. In various embodiments, the sensor system 102 (e.g., the dual frequency comb interferometer device 112 thereof) is configured to emit light through the gas of interest retroflect the light, and analyze the retroflected light. In some embodiments, the dual-frequency comb interferometer device may comprise two locked laser systems configured to sweep through a wavelength range such as, for example, near-infrared or mid-infrared spectra, and output the absorption spectrum as a radio frequency (RF) signal. In various embodiments, the concentrations of a gas of interest (e.g., NOx, SOx, hydrocarbons, and/or the like) may be automatically determined by the sensor system 102 (e.g., the dual frequency comb interferometer device 112 thereof) through processing of the RF signal. In some embodiments, the dual frequency comb interferometer device 112 thereof) is configured to measure gas(es) after combustion within a heating operation. For example, the sensor system 102 may be configured to detect and/or measure concentration of certain gas(es) after combustion within a heating operation or one or more heaters (e.g., one or more burners thereof). For example, the noted combustion may be associated with a heating operation, such as a fired heater operation.

In some embodiments, the sensor system 102 includes a control and optimization module 114. In some embodiments, the control and optimization module 114 of the sensor system 102 is configured to control inputs (and/or other parameters) of the heating operation using the measurement output from one or more dual frequency comb interferometer devices 112.

In some embodiments, the heating operation may comprise one or more heaters, which may comprise one or more burners such as the example burner 10 described above with reference to FIGS 1A-1C. In particular, the sensor system 102 may be configured to monitor and control one or more operating parameters of a heating operation involving a burner such as the burner 10 based on the measurement output (e.g., measured gas(es)) from the one or more dual frequency comb interferometer devices 112 to optimize the heating operation. In this regard, in some embodiments, the sensor system 102 may be configured to monitor one or more gas(es) and control one or more parameters of the heating operation based on the monitoring result (e.g., including gas measurement from a dual frequency comb interferometer device 112). For example, the sensor system 102 may be configured to monitor at least NOx value for a burner flame (as described above) and adjust flowrate of a NOx reducing medium as (as described above) based on at least the NOx value. The NOx reducing medium, for example, may be a recycled flue gas from a combustion zone in the heater.

In this regard, the sensor system 102 may be configured to perform one or more control and/or optimization operations based on measured gas(es), wherein the gas(es) may be measured using the dual frequency comb interferometer device 112 thereof and DCS technique(s)/models. For example, the sensor system 102 may be configured to measure certain gas(es) (e.g., NOx, SOx, and/or other gases) using a DCS model that incorporates DCS principles/techniques.

In some embodiments, the sensor system 102 may be configured to perform and/or facilitate an optimization operation configured to optimize efficiency (e.g., achieve maximum efficiency) and/or to minimize the production of certain gases such as, for example, NOx, SOx, and/or other gases deemed as pollutants. Alternatively, or additionally, in some embodiments, the sensor system 102 may be configured to perform and/or facilitate an optimization operation configured to optimize utilization (e.g., maximize the utilization) of certain feedstocks, such as Hydrogen (H2) or biogas, while maintaining efficient combustion.

Alternatively, or additionally, in some embodiments, the sensor system 102 may be configured to perform (and/or facilitate) an optimization operation configured to optimize combustion efficiency (e.g., increase combustion efficiency). For example, in some embodiments, the sensor system 102 may be configured to perform (and/or facilitate) an optimization operation configured to reduce the amount of unburnt hydrocarbons in flue gas.

Alternatively, or additionally, in some embodiments, the sensor system 102 may be configured to perform and/or facilitate an optimization operation configured to optimize turbulence and/or combustion efficiency. By way of example, the sensor system 102 may be configured to perform such turbulence and/or combustion efficiency optimization for heating operations with heaters (e.g., comprising one or more burners) that use steam and/or pressurized air to increase turbulence and combustion efficiency.

In some embodiments, the sensor system 102 may include any number of computing device(s) and/or system(s) configured for identifying, retrieving, receiving, and/or storing data associated with measuring gases in one or more data repositories 110. Alternatively, or additionally, the sensor system 102 may include any number of computing device(s) and/or system(s) configured for identifying, retrieving, receiving, and/or storing data associated with executing one or more applications (e.g., software application, web application, and/or the like). For example, in some embodiments, the sensor system 102 may facilitate and/or cause execution of one or more gas detection, measurement operations, and/or optimization operations. In some embodiments, the one or more external computing devices 108 may be associated with one or more heaters, such as fired heaters. In some embodiments, the one or more heaters comprise one or more burners.

The dual frequency comb interferometer device 112 may interact with the control and optimization module 114 through data transmission pathways that enable real-time communication of gas concentration measurements. The dual frequency comb interferometer device 112 may generate measurement output comprising concentration data for multiple gas species and transmit the measurement output to the control and optimization module 114 for analysis and optimization operations. The control and optimization module 114 may receive the measurement output and execute optimization algorithms that process gas concentration data to determine optimal operating parameters for the heating operation. Measurement output data including gas concentration measurements, absorption spectrum data, and/or device status information may be transmitted from the dual frequency comb interferometer device 112 to the control and optimization module 114.

The control and optimization module 114 may generate control data based on analysis of measurement output from both laser systems and transmit the control data to the control and optimization module 114 for implementation of operating parameter modifications. The control data generation may involve correlation of gas concentration measurements with operational performance indicators to identify optimal adjustment strategies for air-to-fuel ratios, combustion air flow rates, and emission control parameters. The control and optimization module 114 may execute real-time optimization algorithms that continuously update control data based on dynamic changes in gas concentration measurements.

The control and optimization module 114 may implement automatic modifications to heating operation parameters through actuator control and valve adjustment operations. The control and optimization module 114 may translate control data into specific control signals that adjust combustion air supply rates, fuel delivery rates, and injection system operations to achieve optimization objectives. The control and optimization module 114 may provide feedback to the control and optimization module 114 regarding implementation status and parameter adjustment confirmation to enable closed-loop optimization control.

In some embodiments, an infrared sensor may interact with the control and optimization module 114 to provide flame data that complements gas concentration measurements from the dual frequency comb interferometer device 112. The infrared sensor may detect thermal radiation patterns emitted by flame regions and transmit flame data to the control and optimization module 114 for correlation with gas composition measurements. The control and optimization module 114 may analyze relationships between thermal characteristics detected by the infrared sensor and gas concentration data to generate comprehensive combustion assessment information. In some embodiments, the infrared sensor may be embodied by the sensor system 102.

The control and optimization module 114 may identify correlations between flame temperature patterns detected by the infrared sensor and oxygen concentration measurements from the dual frequency comb interferometer device 112 to assess combustion efficiency. Carbon monoxide concentration measurements may be correlated with flame stability indicators from the infrared sensor to identify incomplete combustion conditions that require operating parameter adjustments.

Real-time fuel gas composition monitoring may be implemented through continuous measurement of fuel gas streams using the dual frequency comb interferometer device 112 positioned or directed at fuel gas input regions or post combustion regions. The dual frequency comb interferometer device 112 may measure hydrocarbon composition, hydrogen content, and heating value indicators in fuel gas streams and transmit the measurement data to the control and optimization module 114 for analysis. The control and optimization module 114 may process fuel gas composition data to determine British Thermal Unit (BTU) value variations and adjust combustion parameters accordingly to maintain optimal performance across changing fuel compositions.

The control and optimization module 114 may implement predictive algorithms that anticipate combustion performance changes based on fuel gas composition variations detected by the dual frequency comb interferometer device 112. The predictive algorithms may calculate required adjustments to air-to-fuel ratios, combustion air preheating, and burner configurations before fuel composition changes affect combustion performance. The real-time fuel gas monitoring may enable proactive optimization that maintains stable combustion conditions despite dynamic fuel quality variations.

Alert generation may be implemented based on threshold criteria established for gas concentration measurements and flame monitoring data. The control and optimization module 114 may compare measurement output from the dual frequency comb interferometer device 112 against predetermined threshold values for oxygen concentrations, methane concentrations, carbon monoxide levels, nitrogen dioxide concentrations, and/or other gas species. The control and optimization module 114 may generate alerts when gas concentration measurements exceed emission limits, indicate unsafe operating conditions, or suggest combustion performance degradation.

The control and optimization module 114 may generate flame-out alerts when the infrared sensor detects absence of thermal radiation patterns that indicate flame presence in any of the one or more burners. The flame-out alert generation may provide immediate notification to operators and safety systems to enable rapid response to potentially dangerous conditions. The alert generation may include automatic implementation of safety procedures including fuel supply isolation and emergency shutdown sequences when flame-out conditions are detected.

User interface visualization may be provided through the communications network 106 to enable operator monitoring of gas concentration measurements, optimization control signals, and/or flame data. The control and optimization module 114 may generate user interface data that presents real-time measurement information, trend analysis, and system status indicators to operators through display systems. The user interface visualization may include graphical representations of gas concentration profiles, flame temperature distributions, and optimization performance metrics that enable comprehensive assessment of heating operation conditions.

The user interface may provide alarm displays and notification systems that alert operators to abnormal operating conditions detected through gas concentration monitoring and flame surveillance. The user interface visualization may include historical data trending that enables operators to assess long-term performance patterns and identify optimization opportunities. The user interface may provide manual override capabilities that allow operators to adjust optimization parameters and control system settings based on operational requirements and maintenance considerations.

The integrated system operation may provide continuous monitoring and optimization capabilities that respond to dynamic changes in fuel composition, operating conditions, and performance requirements. The dual frequency comb interferometer device 112, control and optimization module 114, infrared sensor, and control and optimization module 114 may operate in coordinated fashion to maintain optimal heating operation performance across varying operational conditions. The system integration may enable automated optimization that reduces operator workload while improving combustion efficiency, emission control, and operational safety compared to conventional manual monitoring approaches.

While FIG. 1D illustrates certain components as separate, standalone entities communicating over the network 106, various embodiments are not limited to this configuration. In other embodiments, one or more components may be directly connected and/or share hardware or the like. The depiction of the example system environment 101 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1D and the system environment 101 disclosed therein is merely presented to provide an example basis and context for the facilitation of some of the features, aspects, and uses of the methods, apparatuses, computer readable media, and computer program products disclosed and contemplated herein.

It will be understood that while many of the aspects and elements presented in FIG. 1D are shown as discrete, separate elements, other configurations may be used in connection with the methods, apparatuses, computer readable media, and computer programs described herein, including configurations that combine, omit, separate, or add aspects or elements. The various functions of the system environment 101 may be performed by other arrangements of one or more computing devices or computing systems without departing from the scope of the present disclosure. For example, in some embodiments, the functions of one or more of the illustrated elements in FIG. 1D may be performed by a single computing device or by multiple computing devices, which devices may be local or cloud based.

It will be appreciated that the various functions performed by two or more of the elements presented in FIG. 1D may be embodied by a single apparatus, subsystem, or system comprising one or more sets of computing hardware (e.g., processor(s) and memory) configured to perform various functions thereof. In some embodiments, one or more intermediary devices may be positioned in electrical communication between the depicted system elements (e.g., connection between computing devices may be facilitated by various intermediary networking hardware or software elements). In some embodiments, two or more of the elements in FIG. 1D may be part of a single system or device. In some embodiments, two or more of the depicted elements in FIG. 1D may be physically or electronically remote from each other (e.g., connected via the Internet).

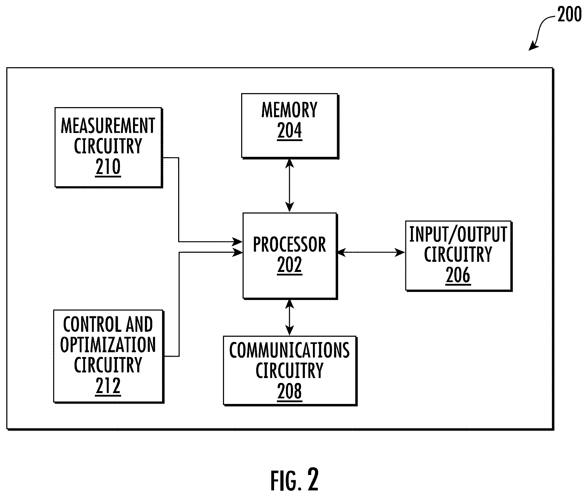

FIG. 2 illustrates a block diagram of an example apparatus in accordance with at least one example embodiment of the present disclosure. Specifically, FIG. 2 depicts an example apparatus 200 ("apparatus 200") specially configured in accordance with at least some example embodiments of the present disclosure. In some embodiments, the sensor system 102 and/or a portion thereof is embodied by one or more system(s), such as the apparatus 200 as depicted and described in FIG. 2. The apparatus 200 includes processor 202, memory 204, input/output circuitry 206, communications circuitry 208, measurement circuitry 210, and/or control and optimization circuitry 212. In some embodiments, the apparatus 200 is configured, using one or more of the sets of circuitry embodied by processor 202, memory 204, input/output circuitry 206, communications circuitry 208, and/or measurement circuitry 210, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, products/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively, or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally, or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively, or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively, or additionally, as another example in some example embodiments, when the processor 202 is embodied as an executor of software instructions, the instructions specifically configure the processor 202 to perform the algorithms embodied in the specific operations described herein when such instructions are executed. In some embodiments, the processor 202 includes hardware, software, firmware, and/or a combination thereof that performs one or more operations described herein.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a user device and/or other display associated with a user.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally, or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device (e.g., client computing device 104), one or more asset(s) or accompanying sensor(s), and/or other external computing device in communication with the apparatus 200.

In some embodiments, the apparatus 200 includes a measurement circuitry 210. The measurement circuitry 210 may include hardware components, software components, and/or a combination thereof configured to, with the processor 202, memory 204, input/output circuitry 206 and/or communications circuitry 208, perform or support one or more functions associated with a dual frequency comb interferometer device 112 (as described above with reference to FIG. 1D). In some embodiments, the measurement circuitry 210 may be configured to receive and/or transmit data, objects, and/or the like from and/or to one or more components of the apparatus 200, through, for example, the use of applications or APIs executed using a processor, such as the processor 202. It should also be appreciated that, in some embodiments, the measurement circuitry 210 may include a separate processor, specially configured field programmable gate array (FPGA), or application specific interface circuit (ASIC) to provide or otherwise facilitate access to such data, objects, and/or the like used by one or more other components of the apparatus 200. The measurement circuitry 210 may also provide for communication with other components of the apparatus, system and/or external systems via a network interface provided by the communications circuitry 208. The measurement circuitry 210 may include hardware, software, firmware, and/or a combination thereof, configured to request, receive, process, generate, and transmit data, data structures, control signals, and electronic information, and/or the like associated with measuring gases. In some embodiments, the measurement circuitry 210 includes a separate processor, specially configured field programmable gate array (FPGA), or a specially programmed application specific integrated circuit (ASIC).

In some embodiments, the apparatus 200 includes a control and optimization circuitry 212. The control and optimization circuitry 212 may include hardware components, software components, and/or a combination thereof configured to, with the processor 202, memory 204, input/output circuitry 206 and/or communications circuitry 208, perform or support one or more functions associated with the control and optimization module 114 (as described above with reference to FIG. 1D). In some embodiments, the control and optimization circuitry 212 may be configured to receive and/or transmit data, objects, and/or the like from and/or to one or more components of the apparatus 200, through, for example, the use of applications or APIs executed using a processor, such as the processor 202. It should also be appreciated that, in some embodiments, the measurement circuitry 210 may include a separate processor, specially configured field programmable gate array (FPGA), or application specific interface circuit (ASIC) to provide or otherwise facilitate access to such data, objects, and/or the like used by one or more other components of the apparatus 200. The control and optimization circuitry 212 may also provide for communication with other components of the apparatus, system and/or external systems via a network interface provided by the communications circuitry 208.

In some embodiments, one or more of the sets of circuitry perform some or all of the functionality described associated with another component. For example, in some embodiments, two or more of the sets of circuitry embodied by processor 202, memory 204, input/output circuitry 206, communications circuitry 208, measurement circuitry 210, and/or control and optimization circuitry 212 are combined into a single module embodied in hardware, software, firmware, and/or a combination thereof. Similarly, in some embodiments, one or more of the sets of circuitry is/are combined with the processor 202, such that the processor 202 performs one or more of the operations described above with respect to each of these sets of circuitry embodied by the measurement circuitry 210.

### Gas Species Measurement and Post-Combustion Monitoring

The dual frequency comb interferometer device 112 may be configured to measure concentration of multiple gas species associated with heating operations. In some embodiments, the one or more gases may include one or more of oxygen, methane, carbon monoxide, carbon dioxide, water vapor, nitrogen dioxide. The dual frequency comb interferometer device 112 may utilize spectroscopic analysis methods to identify and quantify these gas species through absorption spectrum analysis. The measurement of oxygen concentration and/or methane concentration may provide data regarding combustion efficiency and air-to-fuel ratio optimization. Carbon monoxide measurements may indicate incomplete combustion conditions, while carbon dioxide measurements may reflect overall combustion performance and efficiency.

Water vapor measurements may provide information regarding combustion byproducts and humidity conditions within the heating operation. Nitrogen dioxide measurements may enable monitoring of nitrogen oxide emissions (e.g., NOx emissions), which may be regulated pollutants in heating operations as described above. In some embodiments, the dual frequency comb interferometer device 112 may measure these gas species simultaneously, providing comprehensive gas composition data from post-combustion regions.

In some embodiments, the dual frequency comb interferometer device 112 may be configured to measure additional gas species beyond the primary measurement targets. The dual frequency comb interferometer device 112 may measure hydrocarbons to assess combustion completeness and identify unburnt fuel components in flue gas streams. Sulfur oxides (SOx) measurements may be performed to monitor sulfur-containing emissions that may result from fuel combustion processes. These additional measurements may provide enhanced monitoring capabilities for heating operations that utilize various fuel compositions.

The dual frequency comb interferometer device 112 may be configured to monitor post-combustion regions of a firebox, convection section, and stack areas of the heater. A firebox may comprise a radiant section of the heater where primary combustion processes occur. The firebox may include a firebox wall that defines the combustion chamber boundaries. Within the firebox, one or more burners may generate a flame region where fuel combustion takes place. The post-combustion monitoring in the firebox may provide data regarding combustion products and local gas concentrations near the flame region.

A convection section may be positioned downstream from the radiant section to capture heat from combustion gases. The convection section may facilitate heat transfer from hot flue gases to process streams or other heat exchange applications. Gas measurements in the convection section may provide data regarding gas composition changes as combustion products cool and travel through the heating system/heater. The convection section monitoring may enable assessment of heat transfer efficiency and gas composition evolution.

A stack area may represent a final stage of the post-combustion gas flow path where flue gases exit the heating system/heater. Stack area measurements may provide data regarding final emission compositions and overall system performance. The stack area monitoring may enable compliance assessment with emission regulations and environmental standards. Gas measurements in the stack area may reflect the cumulative effects of combustion processes and any gas treatment or conditioning that occurs within the heating system/heater.

The dual frequency comb interferometer device 112 may perform multiple vertical measurements of gas components within the post-combustion regions. These vertical measurements may generate mapping of flue gas profiles that illustrate gas concentration variations at different elevations within the heating system/heater. The vertical measurement mapping may reveal stratification effects, mixing patterns, and concentration gradients that occur within a flue gas passage. The flue gas passage may transport combustion products through the various post-combustion regions from the firebox through the convection section to the stack area.

The concentration measurement techniques may utilize absorption spectroscopy principles where the dual frequency comb interferometer device 112 emits light through gas samples and analyzes the resulting absorption patterns. Different gas species may absorb light at characteristic wavelengths, enabling identification and quantification of individual gas components. In some embodiments, the spectroscopic analysis methods may process absorption spectrum data to determine gas concentrations through comparison with reference spectra and calibration data.

In some embodiments, the dual frequency comb interferometer device 112 may monitor fuel gas composition changes in real time to understand changes in BTU value and composition. The BTU value may represent the heating value or energy content of a fuel gas, measured as the amount of heat energy released when a specific quantity of the fuel gas undergoes complete combustion. The BTU value may indicate the thermal energy potential of the fuel and may vary based on the composition of the fuel gas, including the relative concentrations of different hydrocarbon components, hydrogen, and other combustible gases. The real-time monitoring may enable dynamic assessment of fuel quality variations and heating value fluctuations that may affect combustion performance. The fuel gas composition monitoring may provide data for adjusting combustion parameters to maintain optimal performance despite fuel composition variations. The BTU value monitoring may enable automatic compensation for fuel quality changes through adjustment of air-to-fuel ratios and other combustion control parameters.

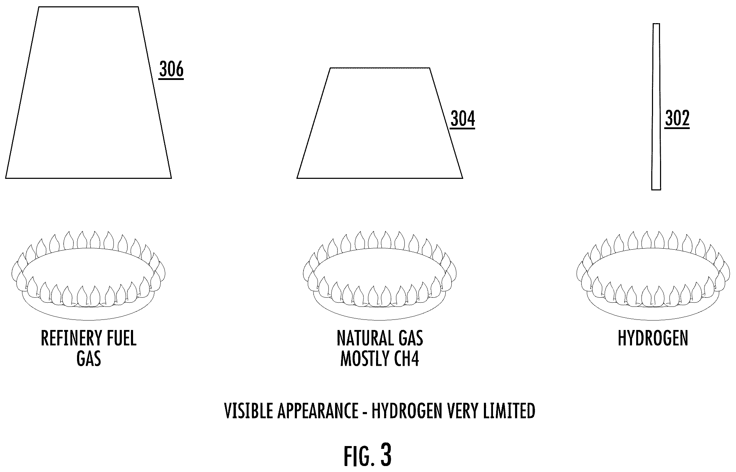

Referring to FIG. 3, flame characteristics (e.g., color, shape, or size) may vary across different fuel types and wavelength spectra. FIG. 3 illustrates a comparison of flame appearances for hydrogen, natural gas (e.g., primarily methane), and refinery fuel gas combustion in the visible spectrum. Specifically, FIG. 3 illustrates flame characteristics 302 for hydrogen, flame characteristics 304 for natural gas, and flame characteristics 306 for refinery fuel gas captured in the visible spectrum. As shown in FIG. 3, the hydrogen flame may exhibit limited visible appearance with minimal luminosity in the visible spectrum, presenting challenges for conventional visual monitoring approaches. The natural gas flame and refinery fuel gas flame may display more pronounced visible characteristics relative to the hydrogen flame. The limited visible appearance of hydrogen flames may present challenges for monitoring techniques that rely on visual inspection of operating conditions (e.g., flame pattern, flame color, flame-out). For example, the reduced visible characteristics of hydrogen flames may compromise the ability of operators to assess combustion conditions through conventional visual inspection techniques.

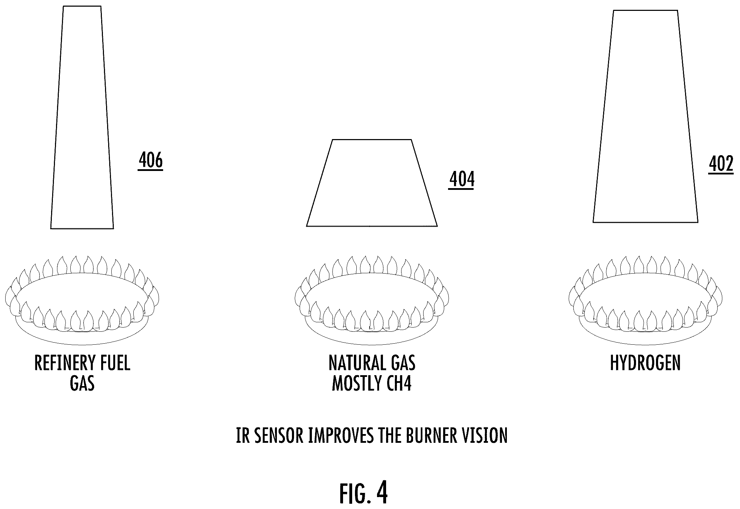

With reference to FIG. 4, infrared sensing technology may provide improved flame monitoring capabilities across relative to visible appearance monitoring techniques. FIG. 4 illustrates flame characteristics for different fuel types in the infrared spectrum. Specifically, FIG. 4 illustrates flame characteristics 402 for hydrogen, flame characteristics 404 for natural gas, and flame characteristics 406 for refinery fuel gas captured using infrared sensor. The infrared sensor may improve the flame monitoring capabilities by detecting thermal radiation emitted by flames regardless of visible spectrum characteristics. The infrared detection may enable improved flame monitoring for hydrogen combustion where visible detection methods may be limited.

In some examples, an infrared sensor may be configured to monitor flame characteristics of one or more burners of a heater. The infrared sensor may detect thermal radiation patterns emitted by flame regions to assess combustion conditions and flame presence. The infrared sensor may provide flame data that includes temperature distribution information, flame shape characteristics, and flame stability indicators. The flame data from the infrared sensor may enable assessment of combustion performance across different fuel compositions.

The infrared sensor may be housed within a sensor housing that provides protection from harsh operating conditions within the heating environment. The sensor housing may include an optical window that allows infrared radiation to reach the infrared sensor while protecting the sensor components from direct exposure to combustion gases and high temperatures. A heat shield may be positioned to protect the sensor housing and infrared sensor from excessive thermal exposure that could affect sensor performance or damage sensor components.

In some embodiments, the sensor system 102 may include such infrared sensor. For example, sensor system 102 may comprise an infrared sensor configured to monitor flame characteristics of the one or more burners. In such some embodiments, flame data from the infrared sensor may be correlated with measured concentration of one or more gases to generate control data for the heating operation. The correlation process may combine thermal characteristics from the infrared sensor with gas composition data from the dual frequency comb interferometer device 112 to provide comprehensive combustion assessment. The correlation process may analyze relationships between thermal patterns detected by the infrared sensor and gas composition measurements to identify optimal operating conditions for the heating operation. The correlated data may enable more accurate determination of combustion efficiency and optimization parameters compared to individual sensor measurements. The sensor system 102 may be configured to correlate flame data from the infrared sensor with measurement data from the dual frequency comb interferometer device 112 to generate optimization control signals. The sensor system 102 may be configured to generate a flame-out alert when the infrared sensor detects absence of flame in any of the one or more burners, providing safety monitoring capabilities for the heating operation.

The combination of infrared sensing with dual frequency comb interferometer measurements may provide comprehensive monitoring capabilities that address both thermal and chemical aspects of combustion processes. The infrared sensor may detect flame presence and thermal characteristics while the dual frequency comb interferometer device 112 may measure gas composition and concentration data. The integrated monitoring approach may enable optimization of heating operations across diverse fuel compositions and operating conditions.

### Sensor Position and Multi-Region Monitoring Configuration

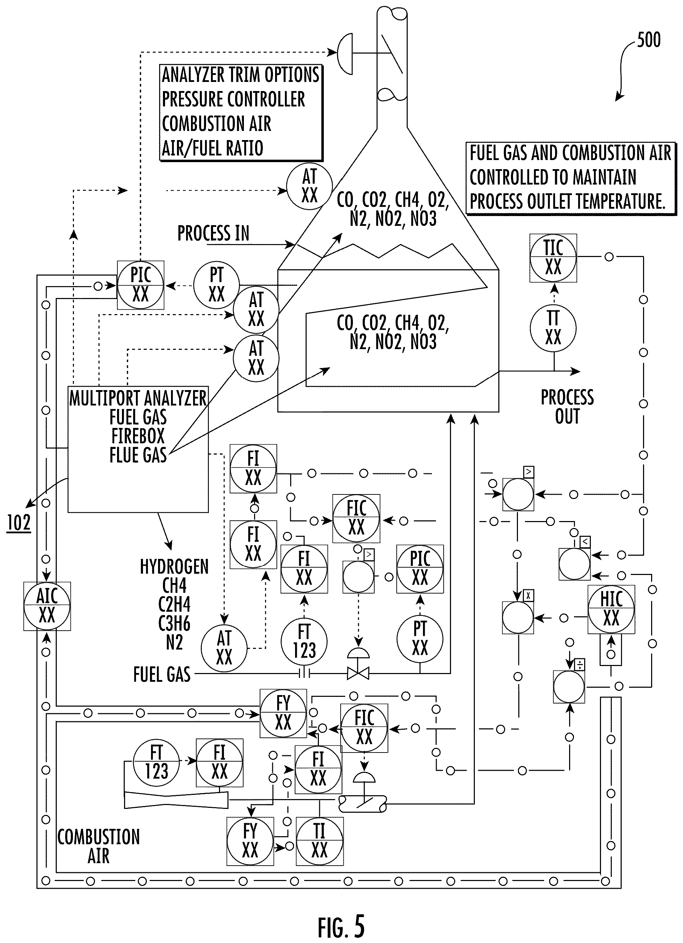

Referring to FIG. 5, the sensor system 102 may be configured for multi-region monitoring across different operational areas of a heater such as a fired heater. The sensor system 102 or one or more components thereof (e.g., at least one dual frequency comb interferometer device 112) may be positioned with respect to the heater 500 or burner(s) to monitor fuel gas input regions, radiant/firebox regions, convection, and stack regions to provide comprehensive assessment of fuel gas composition, combustion conditions, and post-combustion emissions. In some embodiments a single dual frequency comb interferometer device 112 is positioned with respect to the heater or burner(s) to monitor fuel gas input regions, radiant/firebox regions, convection, and stack regions to provide comprehensive assessment of fuel gas composition, combustion conditions, and post-combustion emissions. In some embodiments, a sensor system 102 may be positioned within the heater 500, wherein the sensor system 102 may include a single dual frequency comb interferometer device 112 or multiple dual frequency comb interferometer devices 112). For example, the sensor system 102 may include one or more dual frequency comb interferometer devices 112 that enable simultaneous monitoring across multiple operational areas within the heater.

In the fuel gas input region, A dual frequency comb interferometer device 112 may be positioned to monitor fuel gas composition entering the heating operation through a fuel gas line. A fuel gas line may transport fuel gas from supply sources to one or more burners configured to combust fuel gas within the heating operation. The dual frequency comb interferometer device 112 may measure gas species in the fuel gas stream to determine heating values and compositional characteristics before combustion occurs. The fuel gas monitoring may enable real-time assessment of fuel quality variations and BTU value fluctuations that may affect combustion performance.

An optical path may be established between the dual frequency comb interferometer device 112 and the fuel gas stream to enable spectroscopic analysis of fuel gas composition. An optical path may comprise a light transmission pathway that allows the dual frequency comb interferometer device 112 to emit light through the fuel gas and receive reflected or transmitted light for analysis. The optical path may be configured to pass through the fuel gas stream within the fuel gas line or through a sampling region where fuel gas composition can be analyzed.

A retroreflector may be positioned to redirect light from the dual frequency comb interferometer device 112 back to the dual frequency comb interferometer device 112 for analysis by the dual frequency comb interferometer device 112. In some example, the retroreflector may be positioned to redirect light from the dual frequency comb interferometer device 112 back through the fuel gas stream for enhanced measurement sensitivity. For example, in such some embodiments, the retroreflector may comprise optical elements that reflect incident light back along the same path, effectively doubling the optical path length through the gas sample. In such some embodiments, the retroreflector configuration may improve measurement accuracy and sensitivity for gas concentration determination by increasing the interaction length between light and gas molecules.

In the firebox region (radiant region), the dual frequency comb interferometer device 112 may be configured to perform multiple vertical measurements of gas components throughout the firebox volume. The radiant/firebox measurements may generate mapping of flue gas profiles within the radiant section, providing spatial distribution data of combustion products at different vertical positions. The dual frequency comb interferometer device 112 may monitor post-combustion regions of the firebox where one or more burners generate combustion products.

The dual frequency comb interferometer device 112 may be positioned to monitor concentration of oxygen, methane, carbon monoxide, carbon dioxide, nitrogen oxides, and/or other gases within the post-combustion regions. The oxygen concentration and/or methane measurements may provide data regarding combustion efficiency and excess air conditions. Carbon monoxide measurements may indicate incomplete combustion conditions that may require adjustment of operating parameters. Carbon dioxide measurements may reflect overall combustion performance and carbon conversion efficiency. Nitrogen oxide measurements may enable monitoring of regulated emissions that may be subject to environmental compliance requirements.

In the convection and/or stack areas of the heater, the dual frequency comb interferometer device 112 may measure gas components in the post-combustion flue gas as combustion products travel toward the stack area. The convection and stack measurements may provide data on final emission compositions and overall system performance before flue gases exit the heater. A tube may be configured to transport gas samples from the convection/stack region to the dual frequency comb interferometer device 112 for analysis, enabling remote measurement capabilities where direct sensor positioning may not be practical.

The dual frequency comb interferometer devices 112 may be communicatively coupled to a control and optimization module 114 of the sensor system 102 through data transmission interfaces that enable real-time communication of the measurement data. The data transmission interfaces may comprise wired or wireless communication pathways that transmit gas concentration measurements, device status information, diagnostic data, and/or other data to the control and optimization module 114 for analysis and/or optimization operations.

The multi-region monitoring configuration of the sensor system 102 may enable automatic adjustment of stack pressure and combustion air flow setpoints in addition to air-fuel ratio modifications. Stack pressure adjustments may optimize draft conditions and flue gas flow characteristics within the heating operation. Combustion air flow setpoint modifications may adjust the quantity of air supplied to the one or more burners to maintain optimal combustion conditions based on measured gas concentrations. The automatic adjustment capabilities may provide comprehensive optimization of heating operation parameters based on multi-region monitoring data.

The sensor system 102 may be applied to vent systems and process gases beyond fired heater applications. Vent system applications may include monitoring of gas compositions in relief systems, vapor recovery systems, and process vent streams where gas composition analysis may be beneficial for operational optimization or environmental compliance. Process gas applications may include monitoring of gas streams in chemical processing operations, refinery units, and other industrial processes where gas composition data may support process control and optimization.

The sensor system 102 may be applied to flare operations for direct calculation of heating values and operational adjustments. Flare operations may combust waste gases or relief gases that may have variable compositions and heating values. The sensor system 102 may measure gas composition in flare gas streams to determine heating values and optimize flare combustion efficiency. The heating value calculations may enable automatic adjustment of flare operating parameters including combustion air supply, steam injection rates, and flare tip configurations to maintain efficient combustion across varying gas compositions.

The multi-region monitoring configuration may provide comprehensive data collection across fuel input, combustion, and post-combustion stages of the heating operation. The sensor system 102 may generate measurement data that enables correlation of fuel gas composition with combustion performance and emission characteristics. The comprehensive monitoring approach may support optimization strategies that consider the entire heating process from fuel input through final emissions, enabling more effective control of heating operation performance.

### Example Control and Optimization

The control and optimization module 114 may be configured to generate control data for heating operations based on measured concentration of one or more gases from the dual frequency comb interferometer device 112. The control and optimization module 114 may receive gas concentration measurements and process the measurement data to determine optimal operating parameters for the heating operation. The control and optimization module 114 may execute optimization algorithms that analyze gas composition data to identify adjustments that may improve heating operation performance across multiple operational objectives.

The control and optimization module 114 may be configured to automatically modify one or more operating parameters of the heating operation based on the control data to optimize combustion efficiency. The automatic modification capabilities may enable real-time adjustment of heating operation parameters without manual intervention, providing responsive control based on measured gas concentrations. The control and optimization module 114 may generate control signals that adjust combustion air flow rates, fuel flow rates, and other operational parameters to maintain optimal combustion conditions.

In some embodiments, the control and optimization module 114 may be configured to optimize the heating operation to minimize production of nitrogen oxides and sulfur oxides. The nitrogen oxide minimization may involve adjustment of combustion temperatures, air-to-fuel ratios, and combustion staging to reduce thermal nitrogen oxide formation and fuel-bound nitrogen conversion. The sulfur oxide minimization may involve optimization of combustion conditions to reduce sulfur compound oxidation and emission formation. The control and optimization module 114 may monitor nitrogen dioxide and sulfur compound concentrations to assess emission reduction effectiveness and adjust optimization parameters accordingly.

The control and optimization module 114 may be configured to optimize the heating operation for maximum efficiency through analysis of combustion performance indicators derived from gas concentration measurements. The efficiency optimization may involve adjustment of excess air levels to minimize heat losses while maintaining complete combustion. The control and optimization module 114 may analyze oxygen concentrations and/or methane concentrations in post-combustion regions to determine optimal air-to-fuel ratios that balance combustion completeness with thermal efficiency. Carbon dioxide concentration measurements may provide feedback regarding combustion efficiency and carbon conversion performance.

In some embodiments, the control and optimization module 114 may be configured to optimize the heating operation to maximize the utilization of feedstocks such as hydrogen or biogas while maintaining efficient combustion. The feedstock optimization may involve adjustment of combustion parameters to accommodate varying fuel compositions and heating values associated with alternative fuel sources. The control and optimization module 114 may monitor fuel gas composition changes and adjust air-to-fuel ratios, combustion air preheating, and burner configurations to maintain optimal combustion performance across different feedstock compositions. The hydrogen utilization optimization may address the unique combustion characteristics of hydrogen including higher flame speeds and different stoichiometric requirements compared to hydrocarbon fuels.

The control and optimization module 114 may be configured to optimize the heating operation to increase the combustion efficiency, wherein increasing combustion efficiency may comprise reducing the amount of unburnt hydrocarbons in the flue gas. The combustion efficiency optimization may involve monitoring carbon monoxide concentrations and hydrocarbon species in post-combustion regions to assess combustion completeness. In this regard, the sensor system 102, using one or more components thereof, may be configured to measure post-combustion hydrocarbons. For example, the sensor system 102 may be configured to measure post-combustion hydrocarbons using a dual frequency comb interferometer device 112 thereof. The control and optimization module 114 may adjust combustion air distribution, fuel injection patterns, and residence time parameters to promote complete fuel oxidation and minimize unburnt hydrocarbon emissions.

The control and optimization module 114 may be configured to automatically adjust an air-to-fuel ratio based on the measured concentration of the one or more gases. The air-to-fuel ratio adjustment may involve modification of combustion air flow rates and fuel flow rates to maintain stoichiometric balance for optimal combustion performance. The control and optimization module 114 may monitor oxygen concentrations and/or methane concentrations in post-combustion regions to determine excess air levels and adjust air supply rates accordingly. Carbon monoxide measurements may provide feedback regarding fuel-rich conditions that may require increased air supply to achieve complete combustion.

The control and optimization module 114 may be configured to receive measurement data from the dual frequency comb interferometer device 112 and process the measurement data for optimization operations, including measurement data for post-combustion hydrocarbons. The control and optimization module 114 may comprise processing capabilities, data storage systems, and communication interfaces that enable integration with heating operation control infrastructure. The control and optimization module 114 may be configured to generate optimization control signals based on the measurement data to minimize production of nitrogen oxides, sulfur oxides, and/or other pollutants through coordinated adjustment of multiple operating parameters.

The control and optimization module 114 may be configured to automatically adjust air-to-fuel ratio of the one or more burners based on the optimization control signals. The air-to-fuel ratio adjustments may involve coordinated control of combustion air supply systems and fuel delivery systems to maintain optimal combustion conditions across multiple burners within the heating operation. The control and optimization module 114 may implement feedback control algorithms that continuously adjust air-to-fuel ratios based on real-time gas concentration measurements from the dual frequency comb interferometer device 112.

The control and optimization module 114 may optimize turbulence and combustion efficiency for heaters that use steam and/or pressurized air to increase turbulence. The turbulence optimization may involve adjustment of steam injection rates and pressurized air flow rates to enhance fuel-air mixing and promote complete combustion. The control and optimization module 114 may monitor combustion performance indicators including unburnt hydrocarbon concentrations and carbon monoxide levels to assess turbulence effectiveness and adjust steam or pressurized air injection accordingly. The pressurized air injection may provide enhanced mixing energy that improves combustion efficiency particularly for difficult-to-burn fuel compositions.

In some embodiments, the control and optimization module 114 may incorporate nitrogen oxide reducing medium such as flue gas, steam, nitrogen and/or carbon dioxide with modulated flow rates for optimization. The nitrogen oxide reducing medium may be injected into combustion zones to reduce flame temperatures and minimize thermal nitrogen oxide formation. The control and optimization module 114 may adjust injection rates of the nitrogen oxide reducing medium based on measured nitrogen dioxide concentrations and combustion temperature indicators. The flue gas recirculation may provide inert diluent that reduces peak combustion temperatures while maintaining adequate combustion performance.

The control and optimization module 114 may modulate rate and location of targeted DeNOx gas injection to optimize heater emissions, efficiency, and process conversion. The targeted DeNOx gas injection may involve selective injection of nitrogen oxide reducing medium at specific locations within the combustion system to achieve optimal emission reduction while maintaining combustion performance. The control and optimization module 114 may adjust injection locations based on temperature profiles and gas concentration measurements to maximize nitrogen oxide reduction effectiveness. The DeNOx gas injection optimization may consider both emission reduction objectives and thermal efficiency maintenance to achieve balanced performance.

The control and optimization module 114 may optimize convection section loading and cross-over temperature in addition to nitrogen oxide emissions. The convection section loading optimization may involve adjustment of heat transfer rates and gas flow patterns to maximize heat recovery efficiency while maintaining appropriate gas velocities and residence times. The cross-over temperature optimization may involve control of gas temperatures at the transition between radiant and convection sections to optimize overall heat transfer performance. The control and optimization module 114 may monitor gas temperatures and composition at multiple locations to assess convection section performance and adjust operating parameters accordingly.

The optimization algorithms implemented by the control and optimization module 114 may utilize model predictive control techniques that predict future system behavior based on current measurements and historical performance data. The model predictive control algorithms may optimize multiple objectives simultaneously including emission minimization, efficiency maximization, and operational stability maintenance. The control and optimization module 114 may implement constraint-based optimization that maintains operating parameters within safe operational limits while pursuing optimization objectives.

The control signal generation may involve proportional-integral-derivative control algorithms that provide stable and responsive adjustment of operating parameters based on measurement feedback from the dual frequency comb interferometer device 112. The control signals may be transmitted through the communications network 106 to actuators and control valves that adjust air flow rates, fuel flow rates, and injection system operations. The control signal implementation may provide coordinated adjustment of multiple operating parameters to achieve comprehensive optimization of heating operation performance.

### EXAMPLE PROCESSES/METHODS OF THE DISCLOSURE

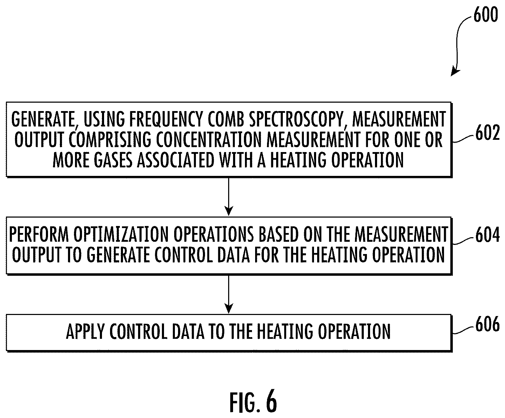

Referring to FIG. 6, an example method/process in accordance with at least some embodiments is discussed herein. Specifically, an example method 600 for controlling and optimizing heating operations using dual frequency comb spectroscopy measurements in accordance with at least some embodiments of the present disclosure is provided. It will be appreciated that the process/method is an example computer-implemented process that is performable by one or more of the apparatuses, systems, devices, and/or computer program products described herein, for example utilizing one or more of the specially configured components thereof.

In some embodiments, the method is embodied by computer program code stored on a non-transitory computer-readable storage medium of a computer program product configured for execution to perform the process as depicted and described. Alternatively, or additionally, in some embodiments, the process is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with separate component(s) of a network, external network(s), and/or the like, to perform one or more of the operation(s) as depicted and described.

Although the example process/method depicts a particular sequence of operations, the sequence may be altered without departing from the scope of the present disclosure. For example, some of the operations depicted may be performed in parallel or in a different sequence that does not materially affect the function of the process/method. In other examples, different components of an example device or system that implements the process may perform functions at substantially the same time or in a specific sequence.

The method 600 may provide a sequential process flow that enables automated optimization of heating operation parameters based on gas concentration measurements from post-combustion regions. The method 600 may be executed by the control and optimization module 114, the control and optimization module 114, and/or the sensor system 102 to provide comprehensive optimization capabilities for heating operations comprising one or more burners.

The method 600 may begin at a step/operation 602 where measurement output is generated using dual frequency comb spectroscopy. The step/operation 602 may comprise measuring concentration of one or more gases associated with a heating operation comprising one or more burners. For example, the heating operation may comprise a heater (such as a fired heater) that includes one or more burners, such as for example, the example burner 10 described above. The measurement generation at the step/operation 602 may utilize the dual frequency comb interferometer device 112 to perform spectroscopic analysis of gas samples from post-combustion regions of a firebox, convection section, and stack areas of the heater. The dual frequency comb interferometer device 112 may be configured to measure various gas species through absorption spectrum analysis. In some embodiments, the gas species may include oxygen, methane, carbon monoxide, carbon dioxide, water vapor, and nitrogen dioxide. In some embodiments, the temperature of the gases (e.g., combusted gases) may be determined based on the relative heights of the corresponding absorption peaks in the absorption spectrum.

The measurement generation techniques at the step/operation 602 may involve emission of light through gas samples (e.g., gas of interest) using two locked laser systems that sweep through wavelength ranges such as near-infrared or mid-infrared spectra. The dual frequency comb interferometer device 112 may output absorption spectrum data as radio frequency signals that enable rapid analysis of gas concentrations. In some embodiments, the step/operation 602 may generate measurement output that comprises concentration data for multiple gas species measured simultaneously from a single device, providing comprehensive gas composition information for optimization operations.

The method 600 may include at step/operation 604, performing one or more optimization operations based on the measurement output from the step/operation 602. The step/operation 604 may comprise generating control data for the heating operation based on the measurement output received from the dual frequency comb spectroscopy measurements. The optimization operations at the step/operation 604 may analyze gas concentration data to determine optimal operating parameters that achieve multiple operational objectives including efficiency maximization, emission minimization, and combustion performance optimization. In some embodiments, performing the one or more optimization operations may comprise applying input data to an optimization model. In some embodiments, the input data includes, but not limited to the gas concentration data and gas temperature measurements, as described above. For example, at least a portion of the input data may be applied to an efficiency optimization function defined by the optimization model.

The optimization operation execution at the step/operation 604 may involve processing of gas concentration measurements through optimization algorithms that identify adjustments for air-to-fuel ratios, combustion air flow rates, and fuel delivery parameters. The step/operation 604 may generate control data that specifies parameter modifications for minimizing production of nitrogen oxides, sulfur oxides, and/or other pollutants while maintaining efficient combustion performance. The optimization operations may utilize model predictive control techniques that predict future system behavior based on current gas concentration measurements and historical performance data.

The step/operation 604 may generate control data for optimizing utilization of feedstocks such as hydrogen or biogas while maintaining efficient combustion across varying fuel compositions. The optimization operations may analyze fuel gas composition changes measured at the step/operation 602 to determine appropriate adjustments for combustion parameters that accommodate alternative fuel sources. The step/operation 604 may generate control data for increasing combustion efficiency through reduction of unburnt hydrocarbons in flue gas based on carbon monoxide and hydrocarbon concentration measurements.

The method 600 may include at step/operation 606, applying control data generated at the step/operation 604 to the heating operation. The step/operation 606 may comprise automatically modifying one or more operating parameters of the heating operation based on the control data. For example, the step/operation 608 may comprise automatically modifying one or more operating parameters of a heater or one or more burners of the heater based on the control data. The automatic parameter modification implementations at the step/operation 608 may involve adjustment of air-to-fuel ratios, combustion air flow rates, fuel injection rates, and steam or pressurized air injection rates for turbulence enhancement.

The step/operation 606 may implement control signals through the communications networks or interfaces to actuators and control valves that modify heating operation parameters in real-time based on the gas concentration feedback from the step/operation 602. The automatic modification at the step/operation 608 may provide coordinated adjustment of multiple operating parameters simultaneously to achieve comprehensive optimization of heating operation performance. The step/operation 608 may adjust stack pressure and combustion air flow setpoints in addition to air-fuel ratio modifications to optimize draft conditions and flue gas flow characteristics.

The method 600 may generate alerts in response to measurement output that satisfies predetermined thresholds or control data that satisfies specific criteria. The alert generation may occur when gas concentration measurements indicate unsafe operating conditions, emission limit exceedances, or combustion performance degradation. The method 600 may generate flame-out alerts when infrared sensor data indicates absence of flame in any of the one or more burners, providing safety monitoring capabilities. The alerts may be transmitted through the communications networks to operators and control systems to enable rapid response to abnormal operating conditions.

The method 600 may enable continuous optimization of heating operations through iterative execution of the steps/operation thereof. The method 600 may provide real-time monitoring and adjustment capabilities that respond to dynamic changes in fuel composition, operating conditions, and performance requirements. The method 600 may be applied to various heating operation configurations including fired heaters, process heaters, and thermal oxidizers that utilize combustion processes for heat generation or waste gas treatment.

### CONCLUSION

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Details regarding various embodiments of the present disclosure are described in the documents in the following pages, which are herein incorporated by reference. Specifically, the documents in the following pages as appendices illustrate various embodiments of the present disclosure.

## Claims

1. A computer-implemented method, comprising:
generating, using dual frequency comb spectroscopy, measurement output comprising measured concentration of one or more gases associated with a heating operation comprising one or more burners;
performing, based on the measurement output, one or more optimization operations comprising generating control data for the heating operation based on the measurement output; and
applying the control data to the heating operation, wherein applying the control data comprises automatically modifying one or more operating parameters of the heating operation based on the control data.

2. The computer-implemented method of claim 1, wherein the one or more gases comprise oxygen, methane, carbon monoxide, carbon dioxide, water vapor, and nitrogen dioxide.

3. The computer-implemented method of claim 1, wherein the dual frequency comb spectroscopy is performed using a dual frequency comb interferometer device comprising two locked laser systems configured to sweep through a wavelength range and output an absorption spectrum as a radio frequency signal.

4. The computer-implemented method of claim 3, wherein the dual frequency comb interferometer device is positioned within a heater comprising the one or more burners.

5. The computer-implemented method of claim 4, wherein the one or more optimization operations comprise optimizing the heating operation to one or more of: (i) optimize the heating operation to minimize production of nitrogen oxides and sulfur oxides, (ii) optimize the heating operation for maximum efficiency, (iii) optimize the heating operation to maximize utilization of feedstocks associated with the heating operation while maintaining efficient combustion, or (iv) optimize the heating operation to increase combustion efficiency, wherein increasing combustion efficiency comprises reducing amount of unburnt hydrocarbons in flue gas used in the heating operation.

6. The computer-implemented method of claim 1, wherein automatically modifying the one or more operating parameters comprises adjusting an air-to-fuel ratio based on the measured concentration of the one or more gases.

7. The computer-implemented method of claim 1, further comprising monitoring flame characteristics of the one or more burners using an infrared sensor.

8. A sensor system, comprising:
a dual frequency comb interferometer device configured to measure concentration of one or more gases associated with a heating operation comprising one or more burners, wherein the dual frequency comb interferometer device comprises two locked laser systems configured to sweep through a wavelength range and output an absorption spectrum as a radio frequency signal; and
a processor configured to:
generate control data for the heating operation based on the measured concentration of the one or more gases, and
automatically modify one or more operating parameters of the heating operation based on the control data to optimize combustion efficiency.

9. The sensor system of claim 8, wherein the one or more gases comprise oxygen, methane, carbon monoxide, carbon dioxide, water vapor, and nitrogen dioxide.

10. The sensor system of claim 8, wherein the dual frequency comb interferometer device is configured to monitor post-combustion regions comprising a firebox, a convection section, and a stack area.

11. The sensor system of claim 10, wherein the dual frequency comb interferometer device is positioned within a heater comprising the one or more burners.

12. The sensor system of claim 8, wherein the processor is further configured to one or more of: (i) optimize the heating operation to minimize production of nitrogen oxides and sulfur oxides, (ii) optimize the heating operation for maximum efficiency, (iii) optimize the heating operation to maximize utilization of feedstocks associated with the heating operation while maintaining efficient combustion, or (iv) optimize the heating operation to increase the combustion efficiency, wherein increasing combustion efficiency comprises reducing amount of unburnt hydrocarbons in flue gas used in the heating operation.

13. The sensor system of claim 8, wherein the processor is configured to automatically adjust an air-to-fuel ratio based on the measured concentration of the one or more gases.

14. The sensor system of claim 8, further comprising an infrared sensor configured to monitor flame characteristics of the one or more burners.

15. An apparatus comprising at least one processor and at least one memory storing instructions that, when executed by the at least one processor, cause the apparatus to:
generate, using dual frequency comb spectroscopy, measurement output comprising measured concentration of one or more gases associated with a heating operation comprising one or more burners;
perform, based on the measurement output, one or more optimization operations comprising generating control data for the heating operation based on the measurement output; and
apply the control data to the heating operation, wherein applying the control data comprises automatically modifying one or more operating parameters of the heating operation based on the control data.
